# EUROPÄISCHE PATENTSCHRIFT

(11) **EP 2 489 531 B1**
(45) Veröffentlichungstag und Bekanntmachung des Hinweises auf die Patenterteilung: **03.12.2014**
(21) Anmeldenummer: 12154721.0
(22) Anmeldetag: 09.02.2012
(51) Int. Cl.: B60G 17/017

(54) **Verfahren zur Fahrerunterstützung bei einem Andock-Vorgang eines Nutzfahrzeugs an einer Rampe**
Driver support method in a procedure of docking a commercial vehicle with a ramp
Procédé d'assistance au conducteur lors d'un événement de liaison d'un véhicule utilitaire sur une rampe

(30) Priorität: 11.02.2011 DE 102011000668
(43) Veröffentlichungstag der Anmeldung: 22.08.2012
(73) Patentinhaber: Haldex Brake Products GmbH, 69123 Heidelberg (DE)
(72) Erfinder: Leiberich, Günter, 69168 Wiesloch (DE)
(74) Vertreter: REHBERG HÜPPE + PARTNER

(56) Entgegenhaltungen:
- WO-A1-2005/080100
- WO-A1-2006/071169
- WO-A1-2006/135326
- DE-A1-102004 029 129
- DE-A1-102006 057 610
- US-A- 3 765 692

## Beschreibung

### TECHNISCHES GEBIET DER ERFINDUNG

Die Erfindung betrifft ein Verfahren zur Fahrerunterstützung bei einem Andock-Vorgang eines Nutzfahrzeugs, insbesondere eines Zugfahrzeugs und/oder Anhängers, an einer Rampe. Derartige Andock-Vorgänge sind insbesondere zur Gewinnung eines Zugangs zu der Ladefläche des Nutzfahrzeugs von der Rampe, insbesondere zum Be- und Entladen des Nutzfahrzeugs, erforderlich.

### STAND DER TECHNIK

Für ein Andocken eines Nutzfahrzeugs muss der Fahrer zunächst das Nutzfahrzeug mit einer Rückwärts-Fahrbewegung in Kontakt mit einer Stirnseite einer Rampe bringen oder dieses in einen definierten Abstand oder Abstandsbereich zu der Stirnseite der Rampe bringen, wobei möglicherweise während des Be- und Entladens des Nutzfahrzeugs ein sich zwischen Rampe und Ladefläche ergebender Spalt durch eine plattenförmige Ladehilfe überbrückt werden kann. Infolge der begrenzten Sichtverhältnisse des Fahrers eines Nutzfahrzeugs bei Rückwärtsfahrt und der unter Umständen beträchtlichen Abmessungen des Nutzfahrzeugs muss der Fahrer beim Rückwärtsfahren besonders vorsichtig sein, Erfahrung besitzen und in beengten Verhältnissen sehr langsam rückwärts fahren mit stetiger Überwachung von Kollisionsmöglichkeiten, unter Umständen mit einem externen Einweiser, ohne dass durch die Rückwärtsfahrt hervorgerufene Gefahren- und Kollisionsquellen gänzlich zuverlässig vermieden werden können. Erschwerend kommt beim Andocken eines Nutzfahrzeugs an eine Rampe hinzu, dass der Fahrer des Nutzfahrzeugs von dem Fahrerhaus aus den Abstand des unter Umständen nicht im Spiegel sichtbaren hinteren Endbereichs einer Ladefläche von der Stirnseite einer Rampe abschätzen muss. Verschätzt sich hier der Fahrer, kollidiert das Fahrzeug mit der Rampe, was Beschädigungen des Fahrzeugs, der Rampe und/oder von Waren auf der Ladefläche des Nutzfahrzeugs zur Folge haben kann.

DE 42 01 806 A1 schlägt eine Rückwärts-Fahrhilfe für Automobile vor. Hier wird über einen Wegsensor, insbesondere über einen eine Laufzeitmessung von Ultraschall-Impulsen oder Radar-Impulsen auswertender Geber, der rückwärtige Abstand des Automobils von einem hinter diesem angeordneten Hindernis erfasst. Der Geber kann auf der rechten und linken Seite der hinteren Stoßstange des Automobils angeordnet sein. Unterschreitet die erfasste Entfernung einen vorgegebenen Mindestabstand, so wird mittels der Rückwärts-Fahrhilfe das Automobil automatisch bis zum Stillstand abgebremst. Die Rückwärts-Fahrhilfe wird automatisch aktiviert, wenn, ebenfalls durch einen Sensor, automatisiert erkannt wird, dass ein Rückwärtsgang angewählt ist. Im Armaturenbrett des Automobils kann an einem Anzeigeinstrument der Abstand zwischen dem Automobil und einem Hindernis angezeigt werden, wobei bei Unterschreitung des Mindestabstandes ergänzend zum automatisierten Bremseingriff ein optisches und/oder akustisches Signal erzeugt werden kann. Möglich ist, dass die Rückwärts-Fahrhilfe über einen Schalter am Armaturenbrett durch den Fahrer aktiviert und deaktiviert wird.

Auf der Internet-Seite der Anmelderin **www.haldex.com/softdocking** wird unter der Kennzeichnung "Soft Docking" ein Verfahren zur Unterstützung eines Fahrers beim Andocken an eine Rampe erläutert, bei welchem ein Abstand des Nutzfahrzeugs von der Rampe während des Rückwärts-Fahrbetriebs durch ein Infrarotsystem erfasst wird. Ist der erfasste Abstand des Nutzfahrzeugs von der Rampe kleiner als ein erster Schwellenwert, insbesondere kleiner als 3 m, so wird dies dem Fahrer des Nutzfahrzeugs über ein optisches und/oder akustisches Signal zur Kenntnis gebracht. Verringert sich der erfasste Abstand anschließend auf weniger als ein zweiter Schwellenwert, vorzugsweise weniger als 2 m, wird eine Frequenz eines optischen Signals wie eines Blinklichts oder die Intensität des akustischen Signals für den Fahrer erhöht, um diesem den verringerten Abstand von der Rampe zur Kenntnis zu bringen. Unterschreitet der Abstand einen dritten Schwellwert, vorzugsweise weniger als 1 m, so erfolgt ein automatisierter Bremseingriff, was durch elektrische Ansteuerung der elektrisch angesteuerten Bremsanlage, hier das System EB+, erfolgen kann. Unterschreitet der Abstand einen vierten Schwellenwert, der beispielsweise 0,5 m beträgt, wird unter Umständen ein permanentes optisches oder akustisches Signal erzeugt. Gleichzeitig erfolgt ein automatisierter Bremseingriff derart, dass das Nutzfahrzeug (spätestens) für einen vorgegebenen Abstand, beispielsweise 0,2 m, zum Stillstand kommt. Ist das Nutzfahrzeug durch den automatisierten Bremseingriff zum Stillstand gebracht, wird dieses über die Bremsanlage des Nutzfahrzeugs für zwei Sekunden im Stillstand gehalten. Hieran anschließend erfolgt der letzte Schritt des Andockens, in dem der Fahrer selbst ohne automatisierten Eingriff in den Antriebsstrang oder die Bremsanlage das Nutzfahrzeug in die finale Andock-Position bringt. Möglich ist, dass der Bremseingriff in Abhängigkeit von der Geschwindigkeit des Nutzfahrzeugs und/oder der Beladung des Nutzfahrzeugs erfolgt.

Auch DE 196 07 788 B4 betrifft ein Verfahren zur Unterstützung eines Fahrers bei Rückwärtsfahrt basierend auf der Erfassung des Abstands des Fahrzeugs von einem Hindernis. In einem ersten Abstützbereich bei Annäherung an das Hindernis wird die Geschwindigkeit des Fahrzeugs unter einem vorgegebenen Wert gehalten, indem die Motorleistung des Fahrzeugs beeinflusst wird. Hingegen wird in einem zweiten, kleineren Abstandsbereich bei Annäherung an das Hindernis die Fahrgeschwindigkeit auf einen zweiten Grenzwert begrenzt, was durch automatischen Aufbau einer Bremskraft an den Radbremsen erfolgt. Hierzu können eine elektronische Motorleistungssteuerung und/oder eine elektronische Bremsensteuerung oder eine ABS-ASR-Steuereinheit genutzt werden. Eine derartige Unterstützung des Fahrers soll gewährleisten, dass der Fahrer die Motorleistung und die Bremskraft nicht selber fein dosieren muss, sondern sich auf die jeweilige Fahrsituation konzentrieren kann.

Bei einer entsprechenden Fahrer-Unterstützung gemäß DE 198 31 262 C2 wird die Geschwindigkeit des Nutzfahrzeugs automatisch durch die Fahrzeugbremsanlage und/oder die Fahrzeugmotorsteuerung in Abhängigkeit von einem Abstandssignal beeinflusst. Hierbei wird die Geschwindigkeit des Nutzfahrzeugs bei großen Abständen des Nutzfahrzeugs von der Rampe mittels eines Sensors erfasst, der die Drehgeschwindigkeit eines Fahrzeugrades ermittelt, während in unmittelbarer Nähe des Nutzfahrzeugs zu der Rampe die zeitliche Änderung des erfassten Abstands als Geschwindigkeitssignal ausgewertet wird. Möglich ist, dass in drei Abstandsbereichen eine Abbremsung des Nutzfahrzeugs auf drei unterschiedliche Geschwindigkeitswerte erfolgt. Vorgeschlagen wird, dass der Abstandssensor in einer Ausnehmung eines im Bereich des Fahrzeughecks angeordneten Rammpuffers angeordnet ist.

Während des Vorwärts-Fahrbetriebs von Nutzfahrzeugen mit Luftfederungen gemäß dem Stand der Technik findet eine Niveauregelung statt, mittels welcher das Niveau eines Fahrzeugaufbaus und damit der Ladefläche des Nutzfahrzeugs geregelt wird, beispielsweise unabhängig von einer Beladung und fahrdynamischen Zuständen konstant gehalten wird. Um eine derartige Niveauregelung zu ermöglichen, sind beispielsweise die folgenden Einrichtungen und Verfahren bekannt:

EP 0 520 148 B1 offenbart eine Luftfederungsanlage, in welcher eine als Vorratsbehälter ausgebildete Druckluftquelle über eine Niveauregelventileinheit und eine Hebe-Senk-Ventileinheit pneumatisch mit Luftfederbälgen verbunden ist. Die Niveauregelventileinheit wird automatisch durch mechanische Betätigung entsprechend einer Veränderung des Niveaus, also des Abstandes eines Fahrzeugaufbaus mit einem Fahrzeugrad oder einer Fahrzeugachse, in eine Belüftungsstellung, eine Sperrstellung oder eine Entlüftungsstellung gesteuert. Die Niveauregelventileinheit wird eingesetzt, um während des Fahrbetriebs eine Soll-Niveauhöhe vorzugeben und zu halten, was insbesondere unabhängig von einer Beladung, Längs- und Querbeschleunigungen beispielsweise bei Kurvenfahrt und Oszillationen, Unebenheiten und Neigungen der Fahrbahn erfolgen soll. Über die Hebe-Senk-Ventileinheit kann der Fahrer für ruhendes Fahrzeug willkürlich das Niveau verändern, also den Fahrzeugaufbau heben oder senken, was zur Niveauanpassung an die Rampe genutzt werden kann. Hierzu besitzt die Hebe-Senk-Ventileinheit einen Wählhebel, welcher mit einer Schaltwelle um eine Rotationsachse verschwenkt werden kann zwischen Schwenkstellungen Heben, Senken und Stopp. Die Schaltwelle trägt Nocken, über welche abhängig vom Rotationswinkel der Schaltwelle und des Wählhebels Stößel betätigt werden können, die wiederum Ein- und Auslassventile betätigen. In der Stellung Heben wird ein Einlassventil geöffnet, welches einen Anschluss der Hebe-Senk-Ventileinheit, der unter Umgehung der Niveauregelventileinheit mit der Druckluftquelle verbunden ist, mit einem Ausgang zu den Luftfederbälgen verbindet. Hingegen wird in der Stellung Senken ein Auslassventil geöffnet, welches den zu den Luftfederbälgen führenden Ausgang entlüftet. In der zwischen den Stellungen Heben und Senken angeordneten Stellung Stopp sind die zuvor genannten Einlass- und Auslassventile geschlossen, so dass der Druck in den Luftfederbälgen konstant gehalten wird. In der Hebe-Senk-Ventileinheit ist eine sogenannte Totmann-Feder eingesetzt, welche als Torsionsfeder ausgebildet ist. Die Totmann-Feder führt den Wählhebel mit Schaltwelle von einer manuell herbeigeführten Stellung Heben oder Senken zurück in die Stellung Stopp, wenn der Fahrer keine Kräfte mehr auf den Wählhebel aufbringt. Die Hebe-Senk-Ventileinheit besitzt darüber hinaus einen pneumatischen Steueranschluss, welcher in einen Druckraum mündet. Der Druckraum ist von einem von einer Feder beaufschlagten Steuerkolben begrenzt, der durch eine Stirnseite der Schaltwelle gebildet ist. Durch Vorgabe eines pneumatischen Steuerdrucks in dem Druckraum kann entgegen der Beaufschlagung durch die Feder eine Axialverschiebung der Schaltwelle mit Wählhebel herbeigeführt werden, welche zur Folge hat, dass bei geschlossenem Einlassventil und geschlossenem Auslassventil ein Verbindungsventil geöffnet wird. Für geöffnetes Verbindungsventil ist die Niveauregelventileinheit über die Hebe-Senk-Ventileinheit mit den Luftfederbälgen verbunden, so dass automatisch über die Niveauregelventileinheit der Druck in den Luftfederbälgen und damit letztendlich das Niveau geregelt werden kann. Die durch pneumatische Druckbeaufschlagung des Druckraums herbeigeführte Stellung entspricht einer Stellung Fahrt, welche über eine Steuereinheit mit entsprechender Ansteuerung eines Magnetventils und derart ausgesteuerten Steuerdruck automatisiert eingenommen wird, wenn sich das Fahrzeug in Bewegung setzt oder eine Grenzgeschwindigkeit überschritten wird.

Gemäß EP 1 382 469 A2 sind zwischen eine Druckluftquelle und Luftfederbälge ein 2/2-Wegeventil in Ausbildung als Sperrventil sowie ein 3/2-Wegeventil in Ausbildung als Be- und Entlüftungsventil zwischengeschaltet. Hierbei können die beiden genannten Ventile sowohl über zugeordnete Elektromagnete elektrisch für eine elektrische Niveauregelung betätigt werden als auch über jeweils einen den Ventilen zugeordneten Stößel manuell für ein Heben und Senken betätigt werden.

DE 199 44 873 C1 offenbart eine Luftfederungsanlage, bei welcher in parallelen Leitungszweigen in einem ersten Leitungszweig eine mechanisch angesteuerte Niveauregelventileinheit angeordnet ist und in einem zweiten Leitungszweig eine rein elektrisch angesteuerte Niveauregelventileinheit angeordnet ist. Die mechanische Niveauregelventileinheit in dem ersten Leitungszweig besitzt einen Niveausensor, dessen Ausgangssignal einer Steuereinheit zugeführt wird, welche, auch auf Grundlage dieses Niveausignals, die rein elektrisch angesteuerte Niveauregelventileinheit in dem anderen Leitungszweig ansteuert. Die Steuereinheit steuert auch ein in dem ersten Leitungszweig angeordnetes Sperrventil an, über welches dieser erste Leitungszweig absperrbar ist, wenn die rein elektronische Niveauregelung in dem zweiten Leitungszweig erfolgt. In einer weiteren Ausführungsform dieser Druckschrift ist eine Druckluftquelle über ein mechanisches Niveauregelventil, eine Hebe-Senk-Ventileinheit, ein Wechselventil und eine rein elektrisch angesteuerte Niveauregelventileinheit mit Luftfederbälgen verbunden. Hier kann der Fahrer manuell Einfluss auf das Niveau der Luftfederungsanlage sowohl über die Hebe-Senk-Ventileinheit als auch über einen elektrischen Wahlschalter nehmen, über welchen ebenfalls ein manuell verursachtes Heben und Senken bei ordnungsgemäßer Spannungsversorgung über die rein elektronische Niveauregelventileinheit veranlasst werden kann.

DE 199 16 040 B4 offenbart eine Luftfederungsanlage, bei welcher zwischen die Druckluftquelle und die hier zweikreisigen Luftfederbälge lediglich eine Niveauregelventileinheit zwischengeschaltet ist. Die Ventile der Niveauregelventileinheit sind hierbei einerseits unmittelbar elektrisch über elektrische Steueranschlüsse der Ventile ansteuerbar. Andererseits kann die Ansteuerung der Niveauregelventileinheit pneumatisch über manuell betätigte Schaltventile erfolgen, die pneumatische Steuerdrücke erzeugen, welche pneumatischen Steueranschlüssen der Ventile der Niveauregelventileinheit zugeführt werden.

EP 1 687 159 B1 offenbart die parallele Anordnung eines ausschließlich elektrisch betätigten Leitungszweigs mit Niveauregelventilen, nämlich einem 3/2-Magnetventil sowie einem Magnetventil, sowie eines Leitungszweigs mit zwei manuell betätigbaren Ventilen, nämlich einem 3/2-Wegeventil sowie einem Sperrventil (s. auch hinsichtlich weiterer Ausführungsformen EP 1 687 160 B1).

EP 2 070 741 B1 offenbart eine Hebe-Senk-Ventileinheit, die neben der manuellen Betätigung auch elektropneumatisch gesteuert von einer Durchlassstellung in eine Sperrstellung überführbar ist. Während für fahrendes Fahrzeug und Hebe-Senk-Ventileinheit in der Durchlassstellung die Niveauregelung aktiviert ist und somit ein Anheben, Konstanthalten und Absenken des Niveaus je nach Überführung des Niveauregelventils in eine Belüftungsstellung, Sperrstellung und Entlüftungsstellung möglich ist, wird durch automatisierte Umschaltung der Hebe-Senk-Ventileinheit in die Sperrstellung die automatische Niveauregelung deaktiviert. Diese Deaktivierung der Niveauregelung wird gezielt entsprechend einer Beschleunigung des Anhängers eingesetzt. Beispielsweise kann so gezielt die Niveauregelung deaktiviert werden, wenn es zu einem Nicken des Fahrzeugs bei einem Bremsvorgang oder zu Einfederungen infolge einer Querbeschleunigung bei einer Kurvenfahrt kommt. Würde keine Deaktivierung der Niveauregelung erfolgen, würden durch die jeweilige Beschleunigung verursachte Ein- und Ausfedervorgänge der Luftfederbälge zu unnötigen Niveauregelaktionen mit einem erhöhten Druckluftverbrauch führen.

Zusammenfassend ist festzustellen, dass der herkömmliche Andock-Vorgang zwei Phasen beinhaltet, nämlich
- zunächst die Annäherung des Nutzfahrzeugs an die Rampe, was mit Unterstützung der eingangs genannten Verfahren oder allein durch den Fahrer erfolgen kann, sowie
- das manuelle Anpassen des Niveaus durch manuelle Betätigung eines Hebe-Senk-Ventils, von Betätigungsorganen oder Schaltern, nach Maßgabe welcher dann eine Steuereinheit elektrische Ventile zur Niveauänderung ansteuert.

Hierbei offenbart DE 10 2009 005 229 A1, dass Schwellenwerte für ein maximales Niveau und/oder ein minimales Niveau a priori in einer Steuereinheit abgelegt sind, bei Inbetriebnahme des Nutzfahrzeugs erlernt werden, eingegeben werden und/oder im Betrieb angepasst werden. Die unterschiedlichen Schwellenwerte können unterschiedlichen geodätischen Orten des Fahrzeugs zugeordnet sein. Beispielsweise können diese Schwellenwerte mit unterschiedlichen Höhen von Laderampen an diesen geodätischen Orten korrelieren. Nähert sich das Fahrzeug somit einer bestimmten Laderampe an, kann der Fahrer manuell den geeigneten Schwellwert auswählen. Ebenfalls vorgeschlagen wird in dieser Druckschrift, dass beispielsweise über ein GPS-System automatisiert die Position des Fahrzeugs erkannt wird und den unterschiedlichen Schwellenwerten die unterschiedliche Position zugeordnet werden. Somit kann die Steuereinheit automatisiert erkennen, welcher Schwellwert für eine Annäherung an eine Laderampe an einem zuvor angefahrenen oder abgespeicherten Ort auszuwählen ist. Hierdurch soll eine erhöhte Automatisierung und automatische Anpassung an unterschiedliche Rampenhöhen erfolgen.

Weiterhin bekannt ist es, verschiedene Rampenhöhen spezifischer von einem Nutzfahrzeug angefahrener Rampen abzuspeichern. Hat sich der Fahrer mit dem Nutzfahrzeug einer dieser spezifischen Rampen angenähert, kann der Fahrer manuell die Rampenhöhe dieser spezifischen Rampe aus dem Speicher abrufen. Aktiviert dann manuell der Fahrer eine Rampenanpassung an diese spezifische Rampe, kann automatisiert durch eine Steuereinheit und hiervon angesteuerten Be- und Entlüftungsventilen das Niveau entsprechend der für die spezifische Rampe aus dem Speicher abgerufenen Rampenhöhe herbeigeführt werden.

Gemäß DE 10 2006 057 610 A1 wird vorgeschlagen, für einen Andock-Vorgang eines Fahrzeugs an eine Wechselbrücke einen Bildsensor einzusetzen. Das Signal des Bildsensors wird einerseits für die Bestimmung des Abstands zwischen dem Fahrzeug und der Wechselbrücke und andererseits für die Ermittlung der Höhe der Wechselbrücke genutzt. Beim Einfahren des Fahrzeugs unter die Wechselbrücke sollen Führungsrollen des Fahrzeugs in angemessener Höhe zur Führungsschiene der Wechselbrücke angeordnet sein, um ein optimales geräusch- und verschleißarmes Einfahren zu ermöglichen. Zum Unterfahren der Wechselbrücke bewegt sich das Fahrzeug zunächst mit normaler Fahrhöhe. Möglich ist aber auch, dass die Höhe des Fahrzeugs derart nachgeregelt wird, dass sich eine optimale Sichthöhe des Bildsensors während des Unterfahrens der Wechselbrücke ergibt. Vor der Wechselbrücke erfolgt dann ein Nachregeln der Höhe des Fahrzeugs. Anschließend bewegt sich das Fahrzeug so lange weiter auf die Wechselbrücke zu, bis ein Zielpunkt unter der Wechselbrücke erreicht ist. Im Stillstand erfolgt dann das Aufnehmen der Wechselbrücke, indem von dem Fahrzeug die Wechselbrücke auf ein vorbestimmtes Niveau angehoben wird und die Stützen eingefahren werden. Hierbei wird die Höhe des Fahrzeugs über dem Boden mittels des Bildsensors erfasst und mittels einer Recheneinheit ausgewertet. Für die Veränderung der Höhe des Fahrzeugs findet ein Aktuator Einsatz. Möglich ist, dass mögliche vorbekannte Höhen von Wechselbrücken abgespeichert sind, wobei auf Grundlage des Bildsensors eine Auswahl einer Höhe mehrerer gespeicherter Höhen erfolgen kann, die dann als Richtwert für die Niveauanpassung verwendet werden, wobei von den Richtwerten ausgehend eine Nachregulierung mit den von dem Bildsensor erfassten Daten erfolgt. Vorgeschlagen wird auch die Einstellung der Höhe des Fahrzeugs in Abhängigkeit der Entfernung des Fahrzeugs von der Wechselbrücke. Auch möglich ist, dass eine Höhe der Wechselbrücke über Funk an das Fahrzeug übertragen wird.

WO 2006/071169 A1 offenbart eine automatische Anpassung der Höhe eines Fahrzeugs an vorbestimmten Orten einer vorbestimmten Fahrroute, wobei die Höhen des Fahrzeugs an den vorbestimmten Orten abgespeichert sind. Hierzu wird eine Positionserkennungseinrichtung, beispielsweise ein GPS-System, eingesetzt. Ein Ausmaß der Höhenanpassung kann von einer Geschwindigkeit des Fahrzeugs abhängen, wobei mit Vergrößerung der Geschwindigkeit des Fahrzeugs der zulässige Bereich für eine Höhenveränderung kleiner wird.

Die nicht gattungsgemäße Druckschrift WO 2005/080100 betrifft die automatische Kupplung eines Fahrzeugs mit einem Anhänger, wobei die Anhängerkupplung des Fahrzeugs mit Annäherung an den Anhänger automatisch abgesenkt wird und mit Erreichen des dem Anhänger zugeordneten Gegenkupplungsstücks wieder angehoben wird. Hierbei kann die für das Absenken und Anheben zuständige Steuereinheit auch ein Lenksystem, eine Antriebseinheit und eine Bremseinheit des Fahrzeugs derart ansteuern, dass die Anhängerkupplung des Fahrzeugs automatisch unter dem Gegenkupplungsstück des Anhängers platziert wird.

DE 10 2004 029129 A1 betrifft ein System zur Automatisierung des Ankuppelvorgangs einer Kupplung eines Zugfahrzeugs an eine Deichsel eines Anhängers unter Nutzung eines Bildsensors. Auf Grundlage der Auswertung des Signals des Bildsensors wird dem Fahrer signalisiert, wann dieser den Bremsvorgang einleiten soll, wobei auch nach Bewegen eines Verschlusselementes ein automatisches Abbremsen des Zugfahrzeugs möglich ist. Eine Regelung der Position des Zugfahrzeugs zu dem Anhänger kann hierbei automatisch in Querrichtung sowie in Höhenrichtung erfolgen, wozu eine automatische Änderung des Lenkwinkels vorgenommen werden kann.

US 3,765,692 betrifft die Niveauregelung eines Fahrzeugs, welches sich parallel zu einer Plattform bewegt, wie dies beispielsweise für eine Bewegung eines Passagierfahrzeugs entlang einer Bushaltestellen-Plattform der Fall ist, im Bereich welcher die Passagiere möglichst stufenfrei das Fahrzeug betreten können sollen.

Die Druckschrift WO 2006/135326 A1 betrifft ein System zur Anpassung der Höhe und der Neigung eines Fahrzeugs, welches vor einer Rampe zum Stillstand gebracht worden ist. Über das System erfolgt unmittelbar vor der Rampe auf Anweisung eines Fahrers, die über ein Bedienelement des Systems eingegeben wird, eine automatische Höhen- oder Neigungsanpassung des Fahrzeugs an die Rampe. Die Anpassung kann dabei entsprechend über das Bedienelement eingegebenen Vorgaben des Fahrers erfolgen. Der Fahrer kann jedoch auch in dem System hinterlegte Werte für bereits angefahrene Rampen auswählen, an denen bereits einmal eine manuelle Anpassung durchgeführt worden ist. Die Anpassung erfolgt dann entsprechend den in dem System hinterlegten Werten. Um die Bedienung zu vereinfachen, können die Werte zu einer bereits angefahrenen Rampe auch automatisch ausgewählt werden, wenn über ein GPS-System erkannt wird, dass es sich um eine bereits einmal angefahrene Rampe handelt, zu der bereits Werte für die Höhen- und/oder Neigungsanpassung hinterlegt sind.

### AUFGABE DER ERFINDUNG

Der Erfindung liegt die Aufgabe zugrunde, ein Verfahren vorzuschlagen, mittels dessen der Fahrer während eines Andock-Vorgangs eines Nutzfahrzeugs an eine Rampe weiter unterstützt oder entlastet wird

### LÖSUNG

Die Aufgabe der Erfindung wird erfindungsgemäß mit einem Verfahren mit den Merkmalen des Patentanspruchs 1 gelöst. Weitere Ausgestaltungen eines derartigen erfindungsgemäßen Verfahrens ergeben sich entsprechend den abhängigen Patentansprüchen.

### BESCHREIBUNG DER ERFINDUNG

Die Erfindung beruht auf der Erkenntnis, dass der gesamte Andock-Vorgang, welcher einerseits die Annäherung des Nutzfahrzeugs an die Rampe beinhaltet und andererseits das Anpassen des Niveaus der Ladefläche an die Rampe beinhaltet, für den Fahrer zeitaufwendig ist. Dieser gesamte Andock-Vorgang gemäß dem Stand der Technik kann bedeuten, dass der Fahrer zunächst mit der Rückwärtsfahrt das Fahrzeug beabstandet von der Rampe zum Stehen bringen muss. Der Fahrer muss unter Umständen dann das Fahrerhaus verlassen, um den Fahrzeugaufbau derart abzusenken, dass keine Kollision eines Aufbaus des Fahrzeugs mit der Umgebung der Rampe, beispielsweise einem Dach, erfolgt. Danach begibt sich der Fahrer wieder in das Fahrerhaus und beendet die Annäherung an die Rampe, bis sich das Nutzfahrzeug in Kontakt mit der Rampe befindet oder einen vorgegebenen Abstandsbereich zu dieser hat. Nun muss der Fahrer nochmals die Fahrerkabine verlassen, um die Rampenanpassung vorzunehmen. Selbst für den Fall, dass eine Niveauhöhe passend zu der spezifischen Rampe abgespeichert ist, muss der Fahrer manuell die Rampenanpassung auslösen und warten, bis die Rampenanpassung vorgenommen worden ist. Die Gesamtzeit für einen derartigen Andock-Vorgang gemäß dem Stand der Technik ergibt sich somit aus der Summe der erforderlichen Zeitspannen für das teilweise und/oder vollständige Annähern an die Rampe, das Verlassen des Fahrerhauses und den Weg des Fahrers zur Rückseite des Fahrzeugs und wieder zurück mit dem Wiedereinstieg in das Fahrerhaus sowie die Durchführung der Rampenanpassung selbst. Erfindungsgemäß wird der Andock-Vorgang verkürzt und/oder für den Fahrer vereinfacht, indem bereits während der Annäherung des Nutzfahrzeugs an die Rampe eine Niveauanpassung an die Rampe automatisch eingeleitet und/oder zumindest teilweise durchgeführt wird. Eine derartige Einleitung der Niveauanpassung kann in der automatischen Durchführung von Maßnahmen zur Vorbereitung der Niveauanpassung, beispielsweise die voreilende Überführung von Ventilen in andere Schaltstellungen, eine Aktivierung eines Sensors für die Erfassung einer Niveauhöhe und ähnliches sein, um lediglich einige wenige Beispiele der vielfältigen Möglichkeiten zu nennen. Vorzugsweise besteht die Einleitung der automatischen Niveauanpassung allerdings bereits in einer Be- und Entlüftung eines Luftfederbalges, also in einer tatsächlichen Niveauänderung. Diese automatische Einleitung kann unmittelbar mit dem Erreichen der Endposition des Nutzfahrzeugs an der Rampe, beispielsweise über einen Kontaktsensor des Nutzfahrzeugs mit der Rampe, ausgelöst werden oder automatisch mit einer vorgegebenen Zeitverzögerung gegenüber dem Erreichen der Endposition. Für eine bevorzugte Ausgestaltung erfolgt allerdings die automatisch eingeleitete Niveauanpassung bereits vor dem Erreichen der Endposition, was während eines Rückwärts-Fahrbetriebs des Nutzfahrzeugs bei der Annäherung an der Rampe der Fall sein kann oder aber auch für einen zwischenzeitlichen Stopp des Nutzfahrzeugs während des Annäherungs-Vorgangs. Durch die erfindungsgemäße automatische Einleitung wird der Fahrer des Nutzfahrzeugs während des Andock-Vorgangs von entsprechenden manuell durchzuführenden Schritten für die Einleitung entlastet, so dass der Fahrer seine Aufmerksamkeit voll den anderen sicherheitsrelevanten Vorgängen während des Andock-Vorgangs widmen kann. Andererseits kann es durch die erfindungsgemäßen Maßnahmen zu einer Zeitersparnis kommen.

Erfindungsgemäß wird ein Ort und ein Umfang einer manuell herbeigeführten Niveauanpassung an einer spezifischen Rampe abgespeichert. Fährt somit beispielsweise ein Fahrer erstmalig eine Rampe an, führt der Fahrer an dieser Rampe insbesondere über ein Hebe-Senk-Ventil oder entsprechende elektrische Schalter eine manuelle Niveauänderung durch, bis ein erforderliches Niveau der Rampe erreicht ist. Nun kann der Fahrer initiieren oder es kann automatisch initiiert werden, dass das herbeigeführte Niveau gespeichert wird und/oder, insbesondere über ein GPS-Signal, der zugeordnete Ort der Rampe abgespeichert wird. Fährt der Fahrer hieran anschließend dieselbe Rampe nochmals an, was insbesondere über den gespeicherten Ort und Abgleich der aktuellen GPS-Koordinaten des Fahrzeugs erkannt werden kann, wird für die nun automatisch eingeleitete und durchgeführte Niveauanpassung der gespeicherte Umfang der vorherigen Niveauanpassung verwendet, wodurch einerseits das Verfahren "lernfähig" ausgebildet ist und andererseits nach dem erstmaligen "Anlernen" der Fahrer eine Unterstützung durch automatische Einleitung und Durchführung der Niveauanpassung erfahren kann. Die Zahl der auf diese Weise zu behandelnden Rampen kann unbegrenzt sein, so dass der Fahrer eine Vielzahl von Rampen entlang einer ständigen oder auch abweichenden Route berücksichtigen kann.

Erfindungsgemäß wird die Niveauanpassung in Abhängigkeit von einer zumindest teilweisen automatischen Abbremsung des Nutzfahrzeugs mit Annäherung an die Rampe automatisch eingeleitet und/oder durchgeführt.

Denkbar ist hier beispielsweise, dass ein Verfahren zur automatischen Abbremsung irgendwann ein Trigger-Signal an ein Verfahren zur Einleitung und/oder Durchführung der Niveauanpassung sendet, welches dann unabhängig von der weiteren automatischen Abbremsung oder mit weiterer Abstimmung der Verfahrensschritte mit der automatischen Abbremsung arbeiten kann. Ebenfalls denkbar ist, dass ein gemeinsames Verfahren sowohl für die automatische Abbremsung des Nutzfahrzeugs als auch für die automatische Einleitung (und ggf. Durchführung) der Niveauanpassung zuständig ist. Schließlich kann das Verfahren zur automatischen Einleitung (und Durchführung) der Niveauanpassung auf gemeinsame Einheiten mit dem Verfahren zu der automatischen Abbremsung des Nutzfahrzeugs zurückgreifen. Beispielsweise kann hierzu eine gemeinsame Steuereinheit genutzt werden, beispielsweise eine ABS- oder EBS-Steuereinheit, und/oder die beiden genannten Verfahren können ein gemeinsames Positions- oder Abstandssignal verwenden, so dass der Positions- oder Abstandssensor multifunktional genutzt ist.

In weiterer Ausgestaltung der Erfindung wird über einen Positionssensor die absolute aktuelle Position des Nutzfahrzeugs erfasst. In Abhängigkeit des Ausgangssignals des Positionssensors, also in Abhängigkeit von der absoluten aktuellen Position des Nutzfahrzeugs, erfolgt dann die automatische Einleitung der Niveauanpassung. Beispielsweise kann die automatische Einleitung der Niveauanpassung erfolgen, wenn über einen GPS-Sensor erkannt wird, dass sich das Nutzfahrzeug an einer Rampe befindet oder sich einer Rampe annähert. Um weitere mögliche Ausgestaltungen zu nennen, könnte über den Positionssensor an einem Referenzort einer Straße, welche zu einer Rampe führt, bereits die automatische Einleitung der Niveauanpassung erfolgen.

In alternativer oder kumulativer Ausgestaltung wird über einen Abstandssensor der Abstand des Nutzfahrzeugs von der Rampe erfasst, wobei hier beliebige, an sich dem Fachmann bekannte Abstandssensoren und Messprinzipien Einsatz finden können. In diesem Fall kann dann das Ausgangssignal des Abstandssensors, also der Abstand des Nutzfahrzeugs, zur automatischen Einleitung der Niveauanpassung verwendet werden. Im einfachsten Fall wird mit Unterschreiten eines vorgegebenen Abstands die Niveauanpassung eingeleitet und/oder zumindest teilweise durchgeführt.

Für die Wahl des Zeitpunktes der automatischen Einleitung der Niveauanpassung, den Umfang der automatisch herbeigeführten Niveauanpassung und/oder die Schnelligkeit der automatisch eingeleiteten und durchgeführten Niveauanpassung gibt es vielfältige Möglichkeiten. In einer Ausgestaltung der Erfindung können diese Gestaltungskriterien abhängig sein von der Geschwindigkeit der Rückwärts-Fahrbewegung des Nutzfahrzeugs. Beispielsweise kann der Zeitpunkt der automatischen Einleitung der Niveauanpassung, insbesondere der Abstand des Nutzfahrzeugs von der Rampe für die automatische Einleitung der Niveauanpassung, früher bzw. größer gewählt werden, wenn sich das Nutzfahrzeug mit einer größeren Geschwindigkeit an die Rampe annähert, um genügend Zeit für die automatische Niveauanpassung zur Verfügung zu haben. Umgekehrt möglich ist aber auch, dass der Zeitpunkt der automatischen Einleitung der Niveauanpassung später gewählt wird für größere Geschwindigkeit der Rückwärts-Fahrbewegung, um für die größere Geschwindigkeit noch die Niveauregelung für den Fahrbetrieb länger nutzen zu können und nicht durch eine Niveauanpassung einen instabilen Fahr- oder Bremszustand herbeizuführen oder zu fördern. Entsprechendes gilt für die Schnelligkeit der Niveauanpassung: sind hier unterschiedliche Öffnungsquerschnitte für die Be- und/oder Entlüftung verfügbar, kann die Schnelligkeit der Niveauanpassung über den gewählten Öffnungsquerschnitt von der Geschwindigkeit der Rückwärts-Fahrbewegung abhängig sein. Ebenfalls möglich ist, dass die genannten Gestaltungskriterien von einer über den Positionssensor erfassten absoluten aktuellen Position und/oder von einem über einen Abstandssensor erfassten Abstand des Nutzfahrzeugs von der Rampe abhängig sind. So kann beispielsweise für einen größeren Abstand des Nutzfahrzeugs von der Rampe lediglich eine teilweise Niveauanpassung erfolgen, welche sich dann mit zunehmender Annäherung und Verringerung des Abstands der Umfang der Niveauanpassung verändert. Durchaus denkbar ist auch, dass über eine aktuelle Position nicht nur der Abstand des Nutzfahrzeugs in eine Rückwärts-Fahrrichtung erfasst wird. Vielmehr kann auch eine Positions-Genauigkeit des durch den Fahrer herbeigeführten Andock-Vorgangs quer zur Stirnseite der Rampe erfasst werden. Wird über eine derartige Positions-Genauigkeit detektiert, dass der Fahrer nicht die Rampe "trifft", so kann die automatische Einleitung der Niveauanpassung ausgesetzt werden, obwohl bereits an sich der Abstand erreicht ist, für welchen die automatische Einleitung der Niveauanpassung normalerweise erfolgt, da vermutet wird, dass der Fahrer nochmals rangieren muss und das Nutzfahrzeug nochmals vorwärts bewegen muss mit anschließender erneuter Annäherung an die Rampe.

Durchaus möglich ist, dass die automatische Einleitung der Niveauanpassung beispielsweise immer dann erfolgt, wenn sich das Nutzfahrzeug mit einer Rückwärts-Fahrbewegung an eine Rampe annähert, wobei über entsprechende Beurteilungskriterien auch eine ergänzende Prüfung erfolgen kann, dass sich das Fahrzeug tatsächlich oder mit großer Wahrscheinlichkeit an eine Rampe und nicht an ein anderweitiges Hindernis annähert. In weiterer Ausgestaltung der Erfindung kann der Fahrer aber die automatische Einleitung der Niveauanpassung aktivieren und/oder deaktivieren, so dass diese beispielsweise bei einer Annäherung an eine Rampe erfolgt, nicht aber bei einer Rückwärts-Fahrbewegung zum Einparken oder für ein Rangieren. Selbst für den Fall der Annäherung an eine Rampe kann der Fahrer auch die automatische Einleitung der Niveauanpassung für einige Annäherungsvorgänge zulassen, während dieser die automatische Einleitung der Niveauanpassung für andere Annäherungsvorgänge deaktiviert.

Auch möglich ist, dass das erfindungsgemäße Verfahren Einsatz findet, wenn der Fahrer selber ohne automatisierte Unterstützung die Annäherung an die Rampe durchführt. Wie eingangs erwähnt, kann die automatische Niveauanpassung bereits für rollendes Fahrzeug während der Rückwärts-Fahrbewegung durchgeführt werden. Basiert die automatische Abbremsung des Nutzfahrzeugs oder der durch den Fahrer ohne Unterstützung herbeigeführte Annäherungsvorgang darauf, dass das Nutzfahrzeug zunächst beabstandet von der Rampe zum Stillstand gebracht wird, kann es von Vorteil sein, dass zu dieser Position und im Stillstand des Nutzfahrzeugs die automatische Niveauanpassung automatisch eingeleitet wird und zumindest teilweise auch durchgeführt wird, da hier ein dynamischer Fahrzustand des Nutzfahrzeugs nicht beeinträchtigt wird und ohnehin Zeit für die Einleitung und Durchführung der Niveauanpassung verfügbar ist. Anschließend wird dann nach der automatischen Einleitung der Niveauanpassung das Fahrzeug weiter an die Rampe angenähert, wobei dann auch die Durchführung der Niveauanpassung während der weiteren Annäherung des Nutzfahrzeugs an die Rampe die Niveauanpassung ausgesetzt sein kann oder während dieser letzten Teil-Annäherung fortgeführt wird. Möglich ist auch, dass die weitere Annäherung, insbesondere durch das Verfahren zur automatischen Abbremsung des Nutzfahrzeugs, erst zugelassen wird, wenn die erforderliche Niveauanpassung vollständig erfolgt ist.

In einer Ausgestaltung des erfindungsgemäßen Verfahrens wird das Ausmaß einer erforderlichen Niveauanpassung an einen genormten Typ einer Rampe, an einer Art Durchschnitts-Rampe, an einer spezifischen Rampe oder einen Mittelwert unterschiedlicher Ausmaße einer erforderlichen Niveauanpassung an unterschiedlichen Rampen abgespeichert. Dieses gespeicherte Ausmaß der erforderlichen Niveauanpassung beeinflusst dann die automatisch eingeleitete und durchgeführte Niveauanpassung an der Rampe oder bestimmt diese. Um lediglich ein Beispiel für eine derartige Ausgestaltung zu nennen, kann der Fahrer einen Schalter haben, bei dessen Aktivierung das gespeicherte Ausmaß abgerufen und für die Niveauanpassung verwendet wird. Es versteht sich, dass hier auch ein Betätigungsorgan für den Fahrer bereitgestellt werden kann, mittels dessen der Fahrer zwischen unterschiedlichen gespeicherten Ausmaßen auswählen kann.

Möglich ist auch, dass in dem erfindungsgemäßen Verfahren ein Sensor eingesetzt wird, welcher die Höhe einer Rampe erfasst. Hierbei kann die Höhe der Rampe absolut oder relativ zu dem Nutzfahrzeug, beispielsweise zu der Laderampe, den Achsen u. ä. erfasst werden. Ist auf diese Weise die Höhe der Rampe bekannt, kann dann der Umfang der Niveauanpassung von der erfassten Höhe abhängig sein, also insbesondere derart erfolgen, dass die Ladefläche vollautomatisiert auf die Höhe der Rampe gebracht wird. Dies kann derart erfolgen, dass aus der Höhe der Rampe die erforderliche Niveauanpassung ermittelt wird, die dann ausgeregelt wird. Ebenfalls dankbar ist, dass a priori Betätigungszeiten der Ventile zum Be- und Entlüften der Luftfederbälge zur Herbeiführung der Niveauanpassung berechnet werden können, die dann für die Ansteuerung der Ventile verwendet werden können. Ebenfalls denkbar ist, dass während der Niveauanpassung der Sensor weiterhin die relative Höhe der Rampe gegenüber einem Reverenzpunkt des Nutzfahrzeugs erfasst und dann entsprechend dem erfassten Signal die Niveauanpassung und die Beendigung der Be- und Entlüftung erfolgt.

Eine besondere Ausgestaltung der Erfindung trägt der Problemstellung Rechnung, dass an der Rampe unter Umständen eine Niveauanpassung in einem Ausmaß erforderlich ist, welche für eine Rückwärtsfahrt des Nutzfahrzeugs während des Annäherungs-Vorgangs nicht geeignet ist. Um hier nicht vollständig auf die erfindungsgemäß angestrebte Zeitersparnis verzichten zu müssen, schlägt die Erfindung vor, dass während der Annäherung des Nutzfahrzeugs an die Rampe lediglich eine teilweise automatisch eingeleitete Niveauanpassung bis zu einem vorgegebenen Niveau erfolgt, welches ein fest vorgegebenes minimales und/oder maximales Niveau sein kann, welches aber auch von anderen Parametern wie beispielsweise der Geschwindigkeit oder dem Abstand von der Rampe abhängig sein kann. Erst für einen Stillstand des Fahrzeugs, insbesondere erst mit Erreichen der Endposition an der Rampe, erfolgt dann die restliche Niveauanpassung. Auf diese Weise kann erreicht werden, dass durch die automatische Niveauanpassung die Fahrstabilität des Nutzfahrzeugs auch während des Annäherungs-vorgangs garantiert werden kann.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt stark schematisiert ein Nutzfahrzeug während eines erfindungsgemäßen Andock-Vorgangs an einer Rampe in einer Seitenansicht.
- **Fig. 2**: zeigt ein im Rahmen der Erfindung einsetzbares Verfahren zur Unterstützung des Fahrers durch einen automatischen Bremseingriff während eines Annäherungs-Vorgangs an eine Rampe.
- **Fig. 3**: zeigt schematisch ein erfindungsgemäßes Verfahren zur Unterstützung des Fahrers während eines Andock-Vorgangs.
- **Fig. 4**: zeigt schematisch eine alternative Ausgestaltung eines erfindungsgemäßen Verfahrens zur Unterstützung des Fahrers während eines Andock-Vorgangs.
- **Fig. 5**: zeigt schematisiert ein Nutzfahrzeug während eines erfindungsgemäßen Andock-Vorgangs an einer Rampe in einer Draufsicht.

### FIGURENBESCHREIBUNG

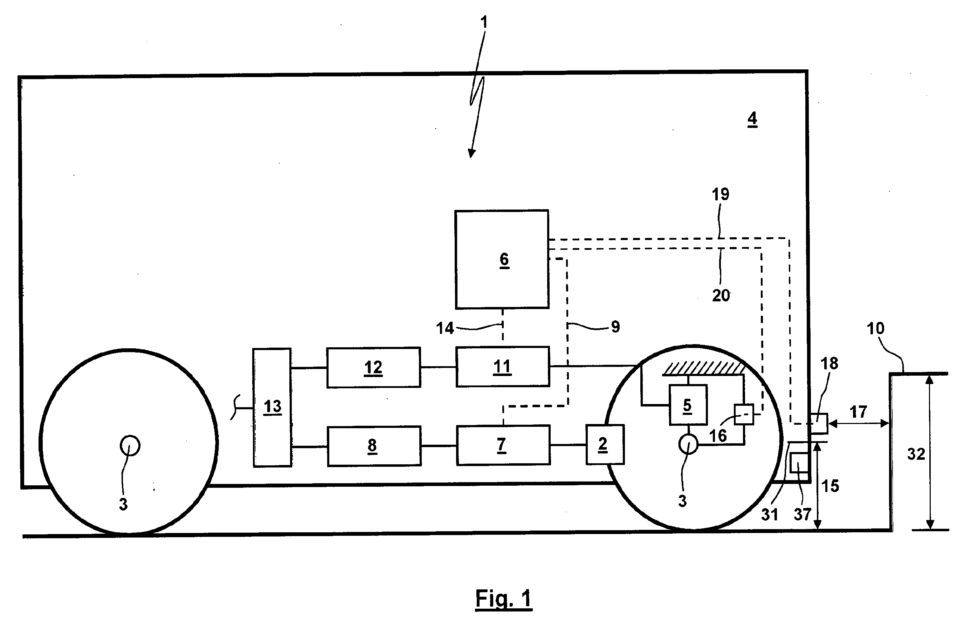

**Fig. 1** zeigt stark schematisiert ein Nutzfahrzeug 1, bei welchem es sich um ein Zugfahrzeug, einen Anhänger oder eine Zugfahrzeug-Anhänger-Kombination in beliebiger Ausgestaltung und mit beliebiger Zahl der Achsen handeln kann. Das Nutzfahrzeug 1 verfügt über Bremsen 2 und mindestens eine Achse 3, gegenüber welcher der Fahrzeugaufbau 4 über Luftfederbälge 5 abgestützt ist. Sowohl die Betriebsstellung der Bremse 2 als auch die Betriebsstellung der Luftfederbälge 5 wird gesteuert durch eine Steuereinheit 6 oder CPU, wobei durchaus möglich ist, dass anstelle der einzigen Steuereinheit 6 unterschiedliche Steuereinheiten zur Steuerung oder Regelung des Betriebs der Bremse 2 einerseits und der Luftfederbälge 5 andererseits zuständig sind.

In Fig. 1 ist beispielhaft eine pneumatische Bremse 2 dargestellt, deren Be- und Entlüftung über eine beliebige Bremseinheit 7 gesteuert wird, die aus einem Behälter 8 mit Druckluft versorgt wird. Neben der üblichen Betätigung der Bremse 2 entsprechend der Betätigung des Fußbremspedals und einer etwaigen ergänzenden ABS- oder EBS-Steuerung ist die Bremseinheit 7 über die gestrichelt dargestellte mindestens eine Steuerleitung 9 von der Steuereinheit 6 angesteuert, womit ein automatischer Bremseingriff für die Annäherung des Nutzfahrzeugs 1 an eine Rampe 10 ermöglicht ist. Entsprechend ist eine Luftfedereinheit 11 aus einem Behälter 12 mit Druckluft gespeist, wobei über die Luftfedereinheit 11 eine elektrische oder mechanische Niveauregelung erfolgt und ein manuelles willkürliches Heben und Senken durch den Fahrer herbeigeführt werden kann, insbesondere mittels eines in die Luftfedereinheit 11 integrierten Hebe-Senk-Ventils oder anderer Betätigungsorgane. Die Behälter 8, 12 werden über ein Mehrkreisschutzventil 13 mit Druckluft in an sich bekannter Weise versorgt, wobei auch ein Entfall eines der Behälter 8, 12 möglich ist und/oder eine Querspeisung mit Druckluft aus einem anderen Verbraucherkreis über das Mehrkreisschutzventil 13 ermöglicht sein kann. Das Mehrkreisschutzventil wird auf in Fig. 1 nicht dargestellte Weise über eine Lufttrocknungseinheit und einen Kompressor mit Druckluft versorgt.

Es versteht sich, dass die Bremseinheit 7 einerseits und die Luftfedereinheit 11 als eine einzige singuläre Bau- und Gehäuseeinheit, als modulare Gehäuseeinheit oder mit mehreren pneumatisch und/oder elektrisch miteinander verbundenen Einzelkomponenten ausgebildet sein können. Die Luftfedereinheit 11 wird über eine Steuerleitung 14 durch die Steuereinheit 6 angesteuert. Die Ausbildung der Bremseneinheit 7 sowie der Luftfedereinheit 11, die pneumatische und/oder elektrische Verbindung mit den benachbarten Bauelementen, die Ansteuerung oder Regelung durch die Steuereinheit 6 kann in an sich beliebig bekannter Weise ausgebildet sein, vgl. hierzu auch den eingangs genannten Stand der Technik. Möglich ist auch, dass anstelle des pneumatischen Bremssystems im Rahmen der vorliegenden Erfindung eine elektromagnetische Bremse eingesetzt ist.

Ein Niveau 15 wird über einen Sensor 16 erfasst. Ein Abstand 17 des Nutzfahrzeugs 1 von der Rampe 10 wird über einen Sensor 18 erfasst. Die Ausgangssignale der Sensoren 16, 18 werden der Steuereinheit 6 über Signalleitungen 19, 20 zugeführt. Es versteht sich, dass abweichend zu der schematischen Fig. 1 (unter Umständen bis auf die Bremse 2, die Luftfederbälge 5, den Sensor 16 und den Sensor 18) die dargestellten Bauelemente auch an anderen Anbringungsorten in dem Nutzfahrzeug 1 angeordnet sein können.

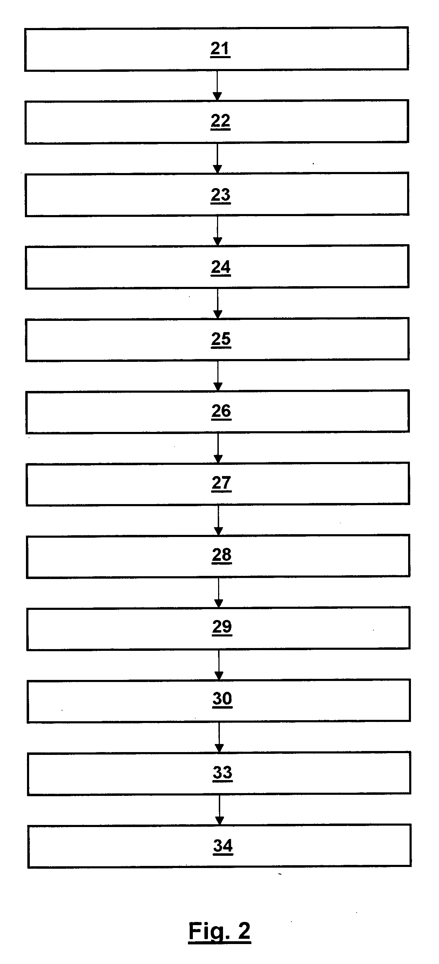

**Fig. 2** zeigt beispielhaft ein Verfahren für einen automatischen Bremseingriff für die Annäherung des Nutzfahrzeugs 1 an die Rampe 10. Mit dem Verfahrensschritt 21 fährt der Fahrer das Nutzfahrzeug 1 in die Nähe der Rampe 10. Mit einem Verfahrensschritt 22 wird das Verfahren für den automatischen Bremseingriff gestartet. Ein derartiger Start kann beispielsweise dadurch erfolgen, dass der Fahrer einen entsprechenden Schalter oder ein anderweitiges Betätigungsorgan betätigt, dass anhand eines GPS-Signals erkannt wird, dass sich das Nutzfahrzeug 1 in der Nähe einer Rampe 10 mit einer bekannten Position befindet und/oder dass ein Rückwärtsgang eingelegt wird oder insbesondere dem Fahrzeugrad zugeordnete Geschwindigkeitssensoren erkennen, dass sich das Nutzfahrzeug 1 rückwärts bewegt. Initiiert wird die Überwachung des Abstands 17 zwischen Nutzfahrzeug 1 und Rampe 10 über den Sensor 18.

In einem Verfahrensschritt 23 wird dann überprüft, ob der Abstand 17 kleiner ist als ein erster Schwellenwert, insbesondere 3 m. Ist dies der Fall, wird automatisch ein akustisches und/oder optisches Signal erzeugt, mit welchem einerseits in einer Fahrerkabine dem Fahrer und andererseits außerhalb des Nutzfahrzeugs 1 Personen in der Umgebung zur Kenntnis gebracht werden kann, dass eine Annäherung an die Rampe 10 erfolgt. Ergänzend kann in dem Verfahrensschritt 23 geprüft werden, ob die Rückwärts-Fahrgeschwindigkeit des Nutzfahrzeugs 1 größer ist als eine Grenzgeschwindigkeit. Ist dies der Fall, können Sondermaßnahmen wie beispielsweise eine erhöhte Bremskraft oder die automatisierte Einführung einer Notbremsung eingeleitet werden.

Im Verfahrensschritt 24 wird dann überprüft, ob sich der Abstand des Nutzfahrzeugs 1 von der Rampe 10 unter einen zweiten Schwellenwert, insbesondere 2 m, verringert hat. Ist dies der Fall, kann dies ebenfalls optisch oder akustisch signalisiert werden, beispielsweise durch Erhöhung der Frequenz eines Blink- oder Warnlichts oder Veränderung des akustischen Signals.

Im Verfahrensschritt 25 wird dann überprüft, ob der Abstand 17 kleiner wird als ein dritter Schwellenwert, insbesondere 1 m. Ist dies der Fall, erfolgt ein automatisierter Bremseingriff über die Ansteuerung der Bremseinheit 7 durch die Steuereinheit 6 mittels der Steuerleitung 9. Hierbei können beliebige, aus dem Stand der Technik, vgl. auch den eingangs genannten Stand der Technik, bekannte Verfahren zur Realisierung des Bremseingriffs sowie hinsichtlich der Gestaltung der erzeugten Bremskraft eingesetzt werden.

In einem Verfahrensschritt 26 wird dann geprüft, ob der Abstand 17 kleiner ist als ein vierter Schwellenwert, bspw. 0,5 m. Ist dies der Fall, kann beispielsweise ein permanentes optisches Signal anstelle des zuvor blinkenden optischen Warnhinweises erzeugt werden. In dem Verfahrensschritt 26 wird dann eine veränderte Bremsstrategie eingesetzt, insbesondere die Bremskraft erhöht, um zu gewährleisten, dass das Fahrzeug spätestens mit einem Abstand 17 bspw. von 0,2 m zum Stillstand kommt. Dies kann beispielsweise derart erfolgen, dass die erforderliche Bremskraft a priori bestimmt wird und dann auf diese Bremskraft geregelt wird. Um lediglich ein weiteres Beispiel zu nennen, kann eine Regelung der Geschwindigkeit entsprechend einer vorbestimmten Trajektorie erfolgen, für die dann für den Abstand 17 von 0,2 m das Nutzfahrzeug 1 zum Stillstand kommt.

Im Verfahrensschritt 27 ist dann das Nutzfahrzeug 1 tatsächlich mit einem Abstand 17 von bspw. 0,2 m (oder u. U. in einem definierten Umgebungsbereich von diesem Abstand) zum Stillstand gekommen. Möglich ist, dass mit angezogener Bremse und/oder Vermeidung eines Eingriffs in die Motorsteuerung, gewährleistet wird, dass der Stillstand, beispielsweise für zwei Sekunden, in jedem Fall unabhängig von etwaigen Manipulationen durch den Fahrer, aufrechterhalten wird. Mit dem Verfahrensschritt 27 endet somit eine erste Teilannäherung an die Rampe 10, während welcher der Fahrer zumindest durch den automatischen Bremseingriff unterstützt wird, vorzugsweise aber die vollautomatische Bremsung bis zu dem Abstand 17 von bspw. 0,2 m erfolgt.

Im Verfahrensschritt 28 kommt dann die zweite Teil-Annäherung des Nutzfahrzeugs 1 an die Rampe. Diese zweite Teil-Annäherung erfolgt durch den Fahrer, vorzugsweise ohne weitere Unterstützung des Fahrers für die Vorgabe des Antriebsmoments oder eines Bremsmoments. Durchaus möglich ist, dass während des Verfahrensschritts 28 dem Fahrer kritische Abstände oder Geschwindigkeiten über entsprechende Warnsignale zur Kenntnis gebracht werden. Ebenfalls möglich ist, dass in kritischen Fahrzuständen ein ergänzender Bremseingriff erfolgt und/oder eine Regelung des Antriebsmoments derart erfolgt, dass die Geschwindigkeit des Nutzfahrzeugs 1 einen Schwellwert nicht überschreiten kann.

Im Verfahrensschritt 29 ist dann eine gewünschte Endposition mit einem definierten Abstand 17 des Nutzfahrzeugs 1 von der Rampe 10 erreicht. Beispielsweise berührt in der Endposition das Nutzfahrzeug 1 die Rampe oder besitzt einen definierten Abstand oder Abstandsbereich von der Rampe 10.

Gemäß dem Stand der Technik erfolgt dann anschließend eine Niveauanpassung in einem Verfahrensschritt 30, in dem ein Niveau 15 einer Ladeplattform 31 des Nutzfahrzeugs 1 auf eine Höhe 32 der Rampe 10 gebracht wird. Dies erfolgt durch Einwirken der Steuereinheit 6 über die Steuerleitung 14 auf die Luftfedereinrichtung 11 mit hierdurch herbeigeführter Be- und Entlüftung, wobei für ein Anlernen oder für ein von der Erfindung umfasstes Anlernen oder für eine Niveauanpassung gemäß dem Stand der Technik die Niveauanpassung auch manuell willkürlich von dem Fahrer durch Einwirken auf eine Hebe-Senk-Ventileinheit erfolgen kann.

Während der Verfahrensschritt 30 mit der Niveauanpassung für den Stand der Technik vollständig nach Durchführung der Verfahrensschritte 22 bis 29 durchgeführt wird, kann erfindungsgemäß die Niveauanpassung 30 während der Verfahrensschritte 22 bis 29 eingeleitet werden und/oder teilweise oder vollständig durchgeführt werden. Mit Ende des Verfahrensschritts 30 und der Niveauanpassung entspricht das Niveau 15 der Ladeplattform 31 der Höhe 32 der Rampe 10.

In einem Verfahrensschritt 33 kann dann das Be- und Entladen von Waren zwischen Rampe 10 und Ladeplattform 31 des Nutzfahrzeugs 1 erfolgen.

Im Verfahrensschritt 34 fährt dann das Nutzfahrzeug mit der be- oder entladenen Ware los, wobei unmittelbar oder mit Erreichen eines definierten Abstands 17 von der Rampe 10 eine Reset-to-Ride-Funktion durchgeführt wird und eine Niveauregelung auf eine vorgegebene Niveauhöhe erfolgt, wie dies an sich dem Fachmann bekannt ist.

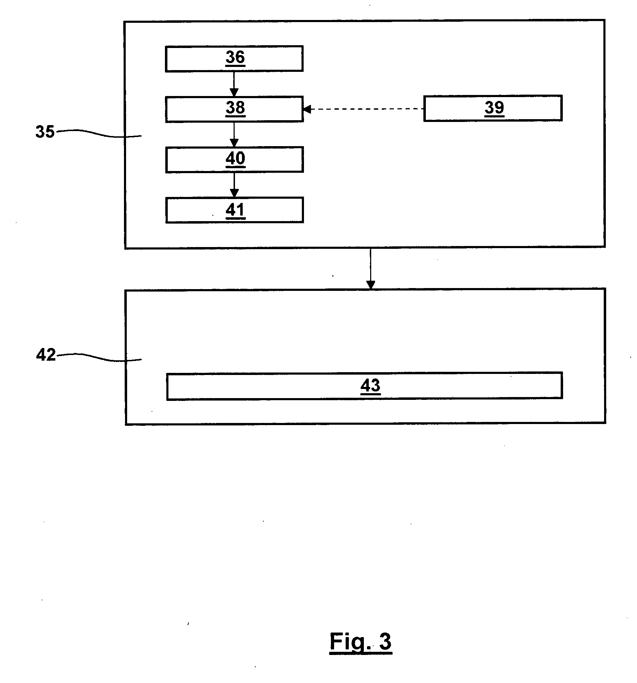

**Fig.3 bis 4** zeigen weitere Möglichkeiten für die erfindungsgemäße Durchführung der Niveauanpassung 30, wobei anhand dieser Figuren auch erläutert wird, wie die Einleitung und Durchführung der Niveauanpassung gemäß Verfahrensschritt 30 zumindest teilweise in die Verfahrensschritte 22 bis 29 verlagert werden kann:
Im Verfahrensschritt 35 erfolgt eine Einleitung der Niveauanpassung. Hierzu kann in einem Verfahrensschritt 36 ein Sensor 37 zur Erfassung der Höhe 32 der Rampe 10 aktiviert werden.

Mittels des Sensors 36 und der Steuereinheit 6 wird dann eine Ziel-Niveauhöhe in einem Verfahrensschritt 38 ermittelt.

In **Fig. 3** alternativ oder zusätzlich ist über den gestrichelten Pfeil dargestellt, dass die Ziel-Niveauhöhe in einem Verfahrensschritt 39 auch aus einem Speicher, welcher beispielsweise der Steuereinheit 6 zugeordnet ist, ausgelesen werden kann oder diese von dem Fahrer über einen Schalter vorgegeben werden kann, wobei auch mehrere aus dem Speicher ausgelesene Ziel-Niveauhöhen von dem Fahrer über einen Schalter selektiert werden können. Ebenfalls möglich ist, dass in dem Verfahrensschritt 39 auf Grundlage eines insbesondere über einen GPS-Sensor ermittelten Ortes ein zugeordneter gespeicherter Wert für die Ziel-Niveauhöhe ausgelesen wird.

In einem anschließenden Verfahrensschritt 40 kann dann eine Zeitdauer ermittelt werden, für die eine Be- oder Entlüftung der Luftfederbälge 5 erfolgen muss.

Schließlich kann in einem Verfahrensschritt 41 eine Vorbereitung von Steuerungsmaßnahmen und vorbereitende Ansteuerung von Ventilen der Luftfedereinheit 11 erfolgen. Dem Fachmann wird ersichtlich sein, dass nicht zwingend die Verfahrensschritte 40, 41 erforderlich sind - vielmehr kann beispielsweise auch bei im Verfahrensschritt 38 ermittelter Ziel-Niveauhöhe anschließend während der Be- und Entlüftung der Luftfederbälge 5 eine Regelung des Niveaus 15 auf die ermittelte Ziel-Niveauhöhe erfolgen.

Die eigentliche Durchführung der Niveauanpassung, also die Be- und Entlüftung der Luftfederbälge 5 über die Luftfedereinheit 11, erfolgt in einem Verfahrensschritt 42. In dem Verfahrensschritt 42 werden über die Steuereinheit 6 und die Steuerleitung 14 Ventile oder Ventilbaugruppen der Luftfedereinheit 11 derart angesteuert, dass eine Be- und/oder Entlüftung der Luftfederbälge 5 erfolgt, bis die Ziel-Niveauhöhe erreicht ist. Hierzu kann eine Regelung durch die Steuereinheit 6 erfolgen, bei welcher der Steuereinheit 6 das Signal des Sensors 16 hinsichtlich des Niveaus 15 zugeführt wird. Hierbei kann der Verfahrensschritt 42 mit einem kontinuierlichen Steuerungs- oder Regelungsverfahren ausgeführt werden. Wie bereits eingangs erwähnt, kann allerdings auch die Anpassung der Niveauhöhe in dem Verfahrensschritt 42 in einzelnen Teil-Verfahrensschritten 42a, 42b, ... erfolgen.

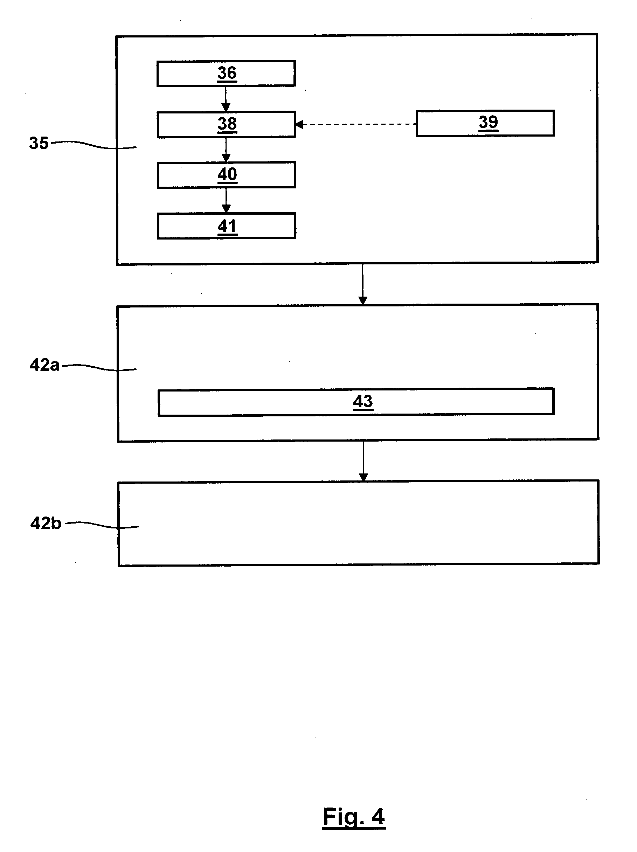

Die Verfahrensschritte 35, 42 können parallel zu beliebigen Zeitpunkten und Zeitspannen während der Verfahrensschritte 22 bis 29 ausgeführt werden. Beispielsweise können die Verfahrensschritte 35, 42a während der Verfahrensschritte 22 bis 29 durchgeführt werden, während die vollständige Anpassung der Niveauhöhe mit Verfahrensschritten 42b, 42c, ... erfolgt, nachdem mit dem Verfahrensschritt 29 die Endposition des Nutzfahrzeugs 1 erreicht ist. Um lediglich ein Beispiel zu nennen, kann der Verfahrensschritt 35 mit sämtlichen Teil-Verfahrensschritten 36, 38, 40, 41 gleichzeitig mit dem Verfahrensschritt 22, nämlich dem Start des automatisierten Verfahrens zum Bremseingriff, durchgeführt werden. Eine Durchführung des Verfahrensschritts 41 oder eines ersten Teilschrittes zur Niveauanpassung kann erfolgen während des Verfahrensschritts 27, also während des Stillstands des Fahrzeugs für einen Abstand von 0,2 m für zwei Sekunden. Selbstverständlich kann auch eine teilweise oder vollständige Anpassung der Niveauhöhe während einzelner, mehrerer oder sämtlicher der Verfahrensschritte 22 bis 29 erfolgen. Integriert sein kann in den Verfahrensschritt 42 ein Verfahrensschritt 43, in welchem eine Regelung des Niveaus 15 auf die Ziel-Niveauhöhe erfolgt. Diese Regelung kann während des gesamten Anpassens der Niveauhöhe in dem Verfahrensschritt 42 zum Einsatz kommen. Ebenfalls denkbar ist, dass in dem Verfahrensschritt 40 zunächst eine Zeitspanne für eine Be- oder Entlüftung ermittelt wird und in dem Verfahrensschritt 42a für diese Zeitspanne tatsächlich die Be- oder Entlüftung angesteuert wird. Erst für einen anschließenden Verfahrensschritt 42b erfolgt dann der Einsatz der Regelung 43, um eine exakte Einregelung des Niveaus 15 auf die Ziel-Niveauhöhe durchzuführen. Abweichend kann gemäß **Fig. 4** zunächst eine gesteuerte oder geregelte Niveauanpassung in dem Teil-Verfahrensschritt 42a erfolgen, während hieran anschließend in einem Teil-Verfahrensschritt 42b eine Niveauanpassung derart erfolgt, dass der Fahrer manuell noch eine Feinjustage des Niveaus vornimmt.

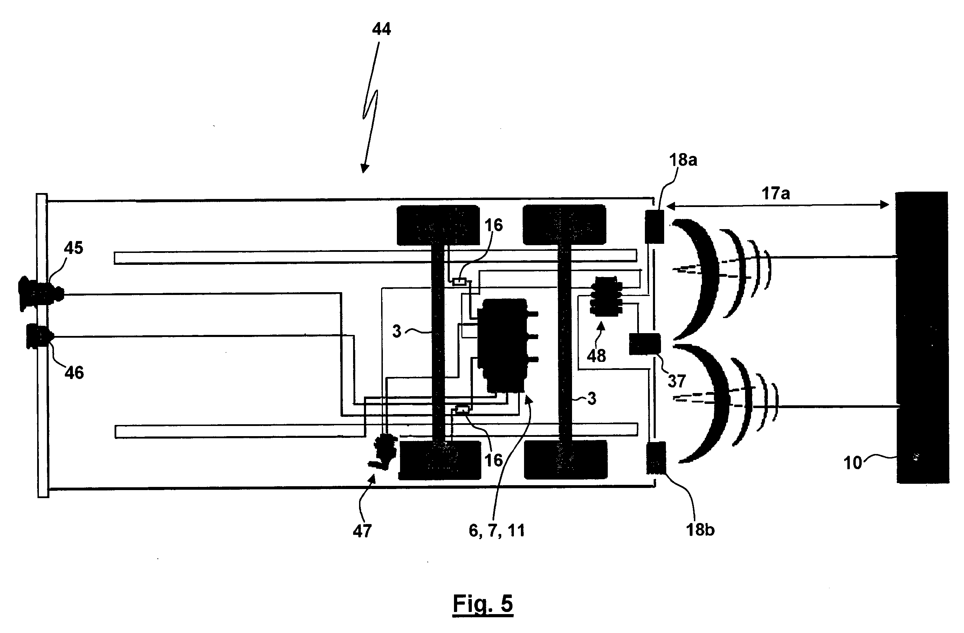

**Fig. 5** zeigt in einer Draufsicht einen Anhänger 44 mit den erforderlichen Bauelementen zur Durchführung eines erfindungsgemäßen Verfahrens. Der Anhänger 44 verfügt über eine Schnittstelle 45, die hier beispielsweise als Schnittstelle gemäß ISO 7638 ausgebildet sein kann, sowie eine Schnittstelle 46, bei welcher es sich vorzugsweise um eine Schnittstelle ISO 1185 (24N) handelt. Die Schnittstellen 45, 46 sind wie dargestellt mit einer Steuereinheit 6, hier einer Steuereinheit EB+ aus dem Unternehmen der Anmelderin, verbunden, so dass die über die Schnittstellen 45, 46 übertragenen Signale der Steuereinheit 6 zugeführt werden. Für dieses Ausführungsbeispiel ist die Steuereinheit 6 gemeinsam mit den pneumatischen Komponenten zur pneumatischen Beaufschlagung von Bremsen einerseits sowie den pneumatischen Komponenten zur Ansteuerung der Luftfederbälge andererseits, also der Bremseinheit 7 sowie der Luftfedereinheit 11, als eine singuläre Baueinheit ausgebildet. Bei der Signalverbindung zwischen der Schnittstelle 45 und der Steuereinheit 6 handelt es sich vorzugsweise um eine Verbindungsleitung gemäß ISO 7638 mit sieben Litzen-PUR mit Signalquerschnitten von 1,5 mm² für fünf Leitungen sowie 4,0 mm² für zwei Leitungen. Hingegen handelt es sich bei der Verbindungsleitung zwischen der Steuereinheit 6 und der Schnittstelle 46 um eine Stopplicht-Versorgung mit zwei Litzen-PUR, jeweils mit einem Querschnitt von 1,5 mm².

Des Weiteren verfügt der Anhänger 44 über ein Hebe-Senk-Ventil 47, bei welchem es sich beispielsweise um das Schaltventil COLAS-E der Anmelderin handeln kann. Für ein so genanntes INFO-CENTER und/oder eine Chassis-Steckdose können ergänzende, in Fig. 5 nicht dargestellte Anschlüsse vorhanden sein.

Darüber hinaus sind in Fig. 5 Sensoren 16 zu erkennen, über welche ein Niveau einer Achse 3 erfasst werden kann. Ebenfalls möglich ist, dass an der dargestellten Stelle ein Sensor vorgesehen ist, über welchen eine Raddrehzahl erfasst wird. Das Hebe-Senk-Ventil 47 wirkt einerseits zusammen mit der Steuereinheit 6 bzw. der Bremseneinheit 7 und/oder der Luftfedereinheit 11. Andererseits ist, wie in Fig. 5 dargestellt, das Hebe-Senk-Ventil 47 mit einer weiteren Steuereinheit 48 gekoppelt, welche für die automatische Ansteuerung der Bremsen mit Annäherung an die Rampe 10 zuständig ist. Dieser Steuereinheit 48 wird das Signal der Sensoren 18a, 18b zur Erfassung des Abstands des Anhängers 44 von der Rampe 10 zugeführt, wobei die beiden Sensoren 18a, 18b vorzugsweise im Bereich der Ecken des Anhängers 44 oder nahe dieser Ecken angeordnet sind. Mittig zwischen diesen Sensoren 18a, 18b befindet sich ein Sensor 37, über welchen die Höhe 32 der Rampe 10 erfasst wird und dessen Ausgangssignal ebenfalls der Steuereinheit 48 zugeführt wird. Erfassen die Sensoren 18a, 18b unterschiedlich zugeordnete Abstände 17a, 17b von der Rampe 10, kann dieses mittels einer Steuereinheit 6, 48 ausgewertet werden als Indiz dafür, ob eine Annäherung des Anhängers 44 mit Ausrichtung der Rückseite oder der Ladefläche parallel zur Rampe 10 erfolgt. Ist dieses nicht der Fall, kann dem Fahrer die unzureichende Ausrichtung über einen beispielsweise optischen und/oder akustischen Hinweis zur Kenntnis gebracht werden.

Für die Ausgestaltung gemäß Fig. 5 ermöglicht das Hebe-Senk-Ventil 47 sowohl die manuelle Beeinflussung des Niveaus über den schematisch dargestellten Wählhebel als auch eine elektrische Beeinflussung der Niveauhöhe über die Steuereinheit 48, so dass gleichzeitig mit der Steuerung der Bremsen durch die Steuereinheit 48 mit der Annäherung des Anhängers 44 an die Rampe 10 die Be- und Entlüftung durch das Hebe-Senk-Ventil 47 elektrisch gesteuert werden kann. Vorzugsweise ist die Steuereinheit 6 auch ohne Einsatz der weiteren Steuereinheit 48 mit den Sensoren 18a, 18b, 37 verwendbar, wenn keine Unterstützung des Fahrers für die Annäherung an die Rampe 10 erfolgen soll. Wird aber ein Anhänger 44 mit der optionalen Steuereinheit 48 und den optionalen Sensoren 18a, 18b und 37 ausgestattet, so kann in diesem Fall die Steuereinheit 48 ein geeignetes Steuersignal für die Steuereinheit 6 erzeugen und an diese absenden, mittels welchem dann die automatische Betätigung der Bremsen erfolgt. Somit besteht ein Signalfluss von den Sensoren 18a, 18b und 37 über die Steuereinheit 48 einerseits zum Hebe-Senk-Ventil 47 und andererseits zu der Steuereinheit 6.

Nach Beendigung des Ladevorgangs, beispielsweise mit Detektierung einer einsetzenden Vorwärts-Geschwindigkeit des Anhängers 44 oberhalb eines Grenzwertes, kann eine Reset-to-Ride-Funktion mittels des Hebe-Senk-Ventils 47 durchgeführt werden. Diese Reset-to-Ride-Funktion kann ausgelöst werden durch mindestens eine der Steuereinheiten 6, 48.

Die erfindungsgemäße Lösung kann in Kombination mit einem beliebigen Verfahren zur automatischen Abbremsung des Nutzfahrzeugs mit der Annäherung an eine Rampe gemäß dem Stand der Technik, insbesondere gemäß den eingangs genannten Druckschriften, und/oder mit beliebigen Luftfedereinheiten gemäß dem Stand der Technik, insbesondere gemäß den eingangs genannten Druckschriften, eingesetzt werden.

Das Hebe-Senk-Ventil 47 ist einerseits mit der ECU EBS/ABS verbunden, um ein Steuersignal zu empfangen für die Steuerung der Reset-to-Ride-Funktion. Das Hebe-Senk-Ventil 47 benötigt darüber hinaus eine weitere Steuerleitung/Information, die als Signal wie von dargestellt von der Soft-Docking Einheit oder alternativ von einem EBS-System kommen kann. Das Signal beinhaltet die Information zum Öffnen und/oder Schließen des Ein-/Auslassventils zur Be- oder Entlüftung der Luftfederbälge und somit der Veränderung der Fahrzeughöhe.

Vorzugsweise umfasst ein erfindungsgemäßes Verfahren, wie dieses beispielsweise in den Patentansprüchen spezifiziert ist, die folgenden Schritte:
- Übermittlung eines Abstandes des Nutzfahrzeuges von einer Rampe,
- Ermittlung einer Höhe der Rampe,
- Einleitung der Niveauanpassung, wenn der Abstand einen Schwellenwert unterschreitet,
- wobei der Umfang und/oder die Schnelligkeit der Niveauanpassung von der erfassten Höhe und/oder der Geschwindigkeit der Rückwärts-Fahrbewegung des Nutzfahrzeugs abhängig sind.

### BEZUGSZEICHENLISTE

- 1: Nutzfahrzeug
- 2: Bremse
- 3: Achse
- 4: Fahrzeugaufbau
- 5: Luftfederbalg
- 6: Steuereinheit
- 7: Bremseinheit
- 8: Behälter
- 9: Steuerleitung
- 10: Rampe
- 11: Luftfedereinheit
- 12: Behälter
- 13: Mehrkreisschutzventil
- 14: Steuerleitung
- 15: Niveau
- 16: Sensor Niveau
- 17: Abstand
- 18: Sensor Abstand
- 19: Signalleitung
- 20: Signalleitung
- 21: Verfahrensschritt
- 22: Verfahrensschritt
- 23: Verfahrensschritt
- 24: Verfahrensschritt
- 25: Verfahrensschritt
- 26: Verfahrensschritt
- 27: Verfahrensschritt
- 28: Verfahrensschritt
- 29: Verfahrensschritt
- 30: Verfahrensschritt
- 31: Ladeplattform
- 32: Höhe
- 33: Verfahrensschritt
- 34: Verfahrensschritt
- 35: Verfahrensschritt
- 36: Verfahrensschritt
- 37: Sensor Rampenhöhe
- 38: Verfahrensschritt
- 39: Verfahrensschritt
- 40: Verfahrensschritt
- 41: Verfahrensschritt
- 42: Verfahrensschritt
- 43: Verfahrensschritt
- 44: Anhänger
- 45: Schnittstelle
- 46: Schnittstelle
- 47: Hebe-Senk-Ventil
- 48: Steuereinheit

## Patentansprüche

1. Verfahren zur Fahrerunterstützung bei einem Andock-Vorgang eines Nutzfahrzeugs (1) an einer Rampe (10), wobei während der rückwärtigen Annäherung des Nutzfahrzeugs (1) an die Rampe (10) eine Niveauanpassung an die Rampe (10) automatisch eingeleitet und/oder zumindest teilweise durchgeführt wird, **dadurch gekennzeichnet, dass**
a) ein Ort und ein Umfang einer manuell herbeigeführten Niveauanpassung an einer spezifischen Rampe (10) abgespeichert werden und die Niveauanpassung bei einer nachfolgenden Annäherung an diese spezifische Rampe (10) in Abhängigkeit des gespeicherten Orts automatisch eingeleitet wird und in Abhängigkeit des gespeicherten Umfangs erfolgt und
b) die Niveauanpassung in Abhängigkeit von einer automatischen Abbremsung des Nutzfahrzeugs mit Annährung an die Rampe (10) automatisch eingeleitet und/oder durchgeführt wird.

2. Verfahren nach Anspruch 1, **dadurch gekennzeichnet, dass** die automatische Einleitung und/oder zumindest teilweise Durchführung der Niveauanpassung während der Rückwärtsfahr-Bewegung des Nutzfahrzeugs (1) erfolgt.

3. Verfahren nach Anspruch 1 oder 2, **dadurch gekennzeichnet, dass** über einen Sensor die absolute aktuelle Position des Nutzfahrzeugs erfasst wird, dessen Ausgangssignal zur zumindest teilweisen Durchführung der Niveauanpassung verwendet wird.

4. Verfahren nach einem der vorhergehenden Ansprüche, **dadurch gekennzeichnet, dass** über einen Sensor (18) der Abstand (17) des Nutzfahrzeugs von der Rampe (10) erfasst wird, dessen Ausgangssignal zur zumindest teilweisen Durchführung der Niveauanpassung verwendet wird.

5. Verfahren nach Anspruch 3 oder 4, **dadurch gekennzeichnet, dass** die Niveauanpassung automatisch eingeleitet wird, wenn der Abstand (17) der aktuellen Position von der Referenzposition einen Schwellenwert unterschreitet.

6. Verfahren nach einem der vorhergehenden Ansprüche, **dadurch gekennzeichnet, dass**
a) der Zeitpunkt der automatischen Einleitung der Niveauanpassung,
b) der Umfang der Niveauanpassung und/oder
c) die Schnelligkeit der Niveauanpassung
abhängig ist von
- der Geschwindigkeit der Rückwärts-Fahrbewegung des Nutzfahrzeugs (1),
- einer über einen oder den Sensor erfassten absoluten aktuellen Position des Nutzfahrzeugs (1) und/oder
- einem über einen Sensor (18) erfassten Abstand (17) des Nutzfahrzeugs (1) von der Rampe (10).

7. Verfahren nach einem der vorhergehenden Ansprüche, **dadurch gekennzeichnet, dass** die automatische Einleitung der Niveauanpassung vom Fahrer aktivierbar und/oder deaktivierbar ist.

8. Verfahren nach Anspruch 7, **dadurch gekennzeichnet, dass**
a) das Nutzfahrzeug (1) beabstandet von der Rampe (10) zum Stillstand gebracht wird, insbesondere durch die automatische Abbremsung des Nutzfahrzeugs,
b) dann die automatische Niveauanpassung automatisch eingeleitet und/oder zumindest teilweise durchgeführt wird und
c) nach der automatischen Einleitung der Niveauanpassung das Nutzfahrzeug (1) weiter an die Rampe (10) angenähert wird.

9. Verfahren nach einem der vorhergehenden Ansprüche, **dadurch gekennzeichnet, dass** ein Ausmaß einer erforderlichen Niveauanpassung abgespeichert wird und dieses gespeicherte Ausmaß die automatisch eingeleitete und durchgeführte Niveauanpassung an einer Rampe (10) beeinflusst oder bestimmt.

10. Verfahren nach einem der vorhergehenden Ansprüche, **dadurch gekennzeichnet, dass** über einen Sensor (37) die Höhe (32) einer Rampe (10) erfasst wird und der Umfang der Niveauanpassung von der erfassten Höhe (32) abhängig ist.

11. Verfahren nach einem der vorhergehenden Ansprüche, **dadurch gekennzeichnet, dass** während der Annäherung des Nutzfahrzeugs an die Rampe (10) lediglich eine teilweise automatisch eingeleitete Niveauanpassung erfolgt und für einen Stillstand des Fahrzeug die restliche Niveauanpassung erfolgt.

## Claims

1. Method for assisting a driver during the docking of a commercial vehicle (1) at a platform (10) wherein during rearward approaching of the commercial vehicle (1) at the platform (10) a level adaption to the platform (10) is automatically introduced and/or at least partially performed, wherein
a) a place and the extent of a manually caused level adaptation at a specific platform (10) are stored and the level adaption at a subsequent approaching at this specific platform is automatically introduced dependent from the stored place and performed dependent from the stored extent and
b) the level adaptation is automatically introduced dependent from an automatic braking of the commercial vehicle with the approaching at the ramp (10) and/or performed.

2. Method of claim 1, wherein the automatic introduction and/or at least partial execution of the level adaptation is done during the reverse movement of the commercial vehicle (1).

3. Method of claim 1 or 2, wherein by a sensor the absolute actual position of the commercial vehicle is sensed wherein an output signal of the sensor is used for at least partially performing the level adaptation.

4. Method of one of claims 1 to 3, wherein via a sensor (18) the distance (17) of the commercial vehicle from the platform (10) is sensed, wherein an output signal of the sensor is used for at least partially performing the level adaptation.

5. Method of claim 3 or 4, wherein the level adaptation is automatically introduced if the distance (17) of the actual position from the reference position becomes smaller than a threshold value.

6. Method of one of claims 1 to 5, wherein
a) the point in time of the automatic introduction of the level adaptation,
b) the extent of the level adaptation and/or
c) the velocity of a level adaptation
depends/depend from
- the velocity of the reverse movement of the commercial vehicle (1),
- an absolute actual position of the commercial vehicle (1) sensed by a or the sensor and/or
- a distance (17) of the commercial vehicle (1) from the platform (10) sensed by a sensor (18).

7. Method of one of claims 1 to 6, wherein the automatic introduction of the level adaptation is activatable and/or deactivatable by the driver.

8. Method of claim 7, wherein
a) the commercial vehicle (1) is brought to stop with a distance from the platform (10), in particular by automatic braking of the commercial vehicle,
b) then the automatic level adaptation is automatically introduced and/or at least partially performed and
c) after the automatic introduction of the level adaptation the commercial vehicle (1) is further approached towards the platform (10).

9. Method of one of claims 1 to 8, wherein the extent of a required level adaptation is stored and this stored extent influences or determines the automatically introduced and performed level adaptation at the platform (10).

10. Method of one of claims 1 to 9, wherein via a sensor (37) the height (32) of a platform (10) is detected and the extent of the level adaptation depends from the sensed height (32).

11. Method of one of claims 1 to 10, wherein during the approaching of the commercial vehicle at the platform (10) only a partial automatically introduced level adaptation is performed and wherein for a stop of the vehicle the remaining level adaptation is performed.

## Revendications

1. Procédé d'assistance de conducteur pour un processus d'accostage d'un véhicule utilitaire (1) à une rampe (10), une adaptation de niveau à la rampe (10) étant automatiquement initiée et/ou au moins partiellement effectuée pendant l'approche en marche arrière du véhicule utilitaire (1) de la rampe (10), **caractérisé en ce que** :
a) un lieu et une étendue d'une adaptation de niveau, effectuée manuellement, à une rampe (10) spécifique, sont enregistrées et l'adaptation de niveau est automatiquement initiée lors d'une approche suivante de cette rampe (10) spécifique en fonction du lieu enregistré et en fonction de l'étendue enregistrée et
b) l'adaptation de niveau est automatiquement initiée et/ou effectuée en fonction d'un freinage automatique du véhicule utilitaire lors de l'approche de la rampe (10).

2. Procédé selon la revendication 1, **caractérisé en ce que** l'engagement automatique et/ou la réalisation au moins partielle de l'adaptation de niveau a lieu pendant le mouvement en marche arrière du véhicule utilitaire (1).

3. Procédé selon la revendication 1 ou 2, **caractérisé en ce que**, grâce à un capteur, la position absolue actuelle du véhicule utilitaire est mesurée, dont le signal de sortie est utilisé pour la réalisation au moins partielle de l'adaptation de niveau.

4. Procédé selon l'une des revendications précédentes, **caractérisé en ce que**, grâce à un capteur (18), la distance (17) entre le véhicule utilitaire et la rampe (10) est mesurée, dont le signal de sortie est utilisé pour la réalisation au moins partielle de l'adaptation de niveau.

5. Procédé selon la revendication 3 ou 4, **caractérisé en ce que** l'adaptation de niveau est initiée automatiquement lorsque la distance (17) entre la position actuelle et la position de référence passe en dessous d'une valeur seuil.

6. Procédé selon l'une des revendications précédentes, **caractérisé en ce que** :
a) le moment de l'engagement automatique de l'adaptation de niveau,
b) l'étendue de l'adaptation de niveau et/ou
c) la rapidité de l'adaptation de niveau
dépendent :
- de la vitesse du mouvement en marche arrière du véhicule utilitaire (1),
- d'une position absolue actuelle, mesurée grâce à un capteur, du véhicule utilitaire (1), et/ou
- d'une distance (17), mesurée grâce à un capteur (18), entre le véhicule utilitaire (1) et la rampe (10).

7. Procédé selon l'une des revendications précédentes, **caractérisé en ce que** l'engagement automatique de l'adaptation de niveau peut être activé et/ou désactivé par le conducteur.

8. Procédé selon la revendication 7, **caractérisé en ce que** :
a) le véhicule utilitaire (1) est immobilisé à une certaine distance de la rampe (10), plus particulièrement par le freinage automatique du véhicule utilitaire,
b) puis l'adaptation de niveau automatique est initiée et/ou au moins partiellement effectuée automatiquement et
c) après l'engagement automatique de l'adaptation de niveau, le véhicule utilitaire (1) est rapproché de la rampe (10).

9. Procédé selon l'une des revendications précédentes, **caractérisé en ce qu'**une étendue de l'adaptation de niveau nécessaire est enregistrée et cette étendue enregistrée influence ou détermine l'adaptation de niveau à une rampe (10) initiée et effectuée automatiquement.

10. Procédé selon l'une des revendications précédentes, **caractérisé en ce que**, grâce à un capteur (37), la hauteur (32) d'une rampe (10) est mesurée et l'étendue de l'adaptation de niveau dépend de la hauteur (32) mesurée.

11. Procédé selon l'une des revendications précédentes, **caractérisé en ce que**, pendant l'approche du véhicule utilitaire de la rampe (10), seule une adaptation de niveau partielle a lieu automatiquement et le reste de l'adaptation de niveau a lieu pour une immobilisation du véhicule.
